# EUROPEAN PATENT APPLICATION

(11) **EP 1 695 613 A1**
(43) Date of publication of application: **30.08.2006**
(21) Application number: 06250959.1
(22) Date of filing: 23.02.2006
(51) Int. Cl.: A01G 9/14

(54) **System and method for adjusting spacing of growing plants**

(30) Priority: 28.02.2005 GB 0504065
(71) Applicant: Evans, George Howard, Near Selby YO8 8NH (GB)
(72) Inventor: Evans, George Howard, Near Selby YO8 8NH (GB)
(74) Representative: Wilson, Peter

(57) **Abstract**

An apparatus for the guidance of growing plants such as vine like plants with a controlled growth separation space and a method for the guidance of growth spacing of plants are described for use in combination with a suspended trough cultivation system. The apparatus comprises a plurality of growing guide beams (11) supported on a guide beam support means (1) generally above and in a row generally parallel with a longitudinal direction of a growing base in the suspended trough (7), each guide beam carrying a plurality of guide wires (13) spaced therealong so as to hang therebelow when the beam is so supported, wherein each beam is further mounted so as to be pivotable, in particular about a generally vertical axis in use. As a result the angle of each beam relative to a notional longitudinal direction can be changed, and hence the effective spacing of the wires hanging on a beam in a direction transverse to the longitudinal direction can be changed.

## Description

The invention relates to a system and method for the growing of plants, and especially tall vine-like plants that produce fruit, flowers or vegetables, in a controlled growing environment, and for example under glass.

The cultivation of plants in a controlled growing volume, where conditions vary from external ambient conditions, is long established in particular in relation to the growing of fruit or vegetables to enhance productivity, for example by increasing yield, extending the growing season etc. In particular, it can often be desirable when such crops are cultivated in a more temperate environment to grow the plants in conditions of elevated temperature and/or humidity. It is well known for example to grow such plants in a controlled volume under glass or an equivalent structure, to exploit the effect of the greenhouse to create enhanced growing conditions. Plants are typically grown in rows, with access between the rows for cultivation and harvesting.

It is often desirable to be able to move crop around within the growing volume. Plants within a given volume may be at a variety of stages of development, to produce steady yield across a growing season, and to maximise yield (for example in the case of vine-like plants, earlier and later maturing plants could be growing to different heights within the volume). The best arrangement for plants to give access for cultivation or harvest might not be the same as the optimum growing arrangement. Most particularly relevant for the present invention, it can be desirable in theory to reorganise plants during the course of the day or season to make best use of light and maximise yield. However this has generally been considered impractical for fruit and vegetable production other than at the propagation stage.

Fixed arrangements of rows represent a compromise. There is clearly a general desire to enable such moving and reorganising of plants within the volume to take place with greater efficiency, ideally with minimal user intervention. It is also the case that mechanisation of crop work within the growing volume is difficult because of constraints on space and access.

Growing systems for vine-like plants, such as tomato plants, are well developed. In one particularly widely used system, plants are cultivated, supported by strings which hang from wires which are in turn supported by the greenhouse structure or a ground-based frame other support. Plants grow up, supported by these strings, from suitable growing media. Plants may be suspended individually, or more typically in rows, for example with an elongate tray containing growing material being suspended by other suitable means, again from the greenhouse roof or other support to accommodate such a row or several such rows. In many instances these strings are height adjustable allowing for adjustment of the plant height as it grows in a process commonly known as layering.

However in conventional systems the support wires are of a predetermined spacing determining the spacing of rows of plants, which is by necessity a compromise for the reasons given above.

Systems have been suggested in which the relative spacing of rows of plants can be altered by physical manipulation of entire growing troughs. For example, UK patent application 0419344.7 describes an arrangement of carriages supporting a trough growing system for vine like plants of the type above described, in which the carriage arrangement is so set up that the supports for entire growing troughs, and consequently the troughs themselves, may be physically moved closer together and more apart laterally as desired to alter plant row spacing.

Such systems, involving the bodily movement of entire growing troughs, confer additional advantages in a limited number of situations. For example, in the case of 0419344.7, one of the main purposes of the invention is to allow the troughs within a growing volume to be moved, reordered and manipulated via a separate work area. However, as a means of achieving as a primary objective a variation in spacing between plants, for example to make use of varying light conditions during the day or during the growing season, movement of entire troughs is likely to be cumbersome, excessive and impractical.

It is an object of the invention to provide a growing system and method which includes a plant spacing capability that mitigates some or all of the above disadvantages, and that in particular facilitates the easy variation of lateral spacing between rows of growing plants in suspended trough based systems such as are above described.

It is a further object of the invention to provide a system and method incorporating a plant spacing capability which is particularly suited to adaptation for use with suspended growing systems for vine-like plants such as tomatoes.

Thus, according to the invention in a first aspect an apparatus for the guidance of growing plants is provided for use in a system for cultivation of plants in a controlled environment of the type comprising an elevated support framework supporting a plurality of growing rows incorporating a growing base containing a growing medium, and upwardly extending suspension means engaging with the support framework.

The guidance apparatus of the invention comprises in its broadest aspect a plurality of growing guide beams supported on a guide beam support means so as to be disposable in use generally above and in a row generally parallel with a longitudinal direction of a growing base as above described, each guide beam carrying a plurality of guide wires spaced therealong so as to hang therebelow and be suitable to carry a growing base thereon when the beam is so supported, wherein each beam is further mounted so as to be pivotable, in particular about a generally vertical axis in use, such that the angle of each beam relative to a notional longitudinal direction defined by the row of beams (and corresponding in use to the longitudinal direction of the growing base) can be changed, and hence the effective spacing of the wires hanging on a beam in a direction transverse to the said longitudinal direction can consequently be changed.

The growing guide apparatus in accordance with the invention is intended for use with, and in a preferred further aspect of the invention is presented in combination with, a suspended trough cultivation system as above described. In such a combination system, the support means supports a row of growing guide beams above and in a general parallel direction to a growing base.

Thus, in such a further aspect of the invention, a guidance apparatus as above described is provided in conjunction with a growing system comprising a growing base such as a trough capable of supporting a growing medium, and upwardly extending suspension means engaging with a suitable support framework, which may be the greenhouse structure, or may be separate therefrom.

Each growing base supports a growing medium for the growth of crop plants, for example vine-like plants such as tomatoes and the like. However, the invention is generally applicable to other plants grown in a similar growing environment where similar considerations apply, for example relatively more bushy plants such as peppers or the like.

Each growing base is intended for the cultivation of a plurality of rows of plants, a corresponding plurality of guide lines is provided on each growing guide beam, so that in the growing guide apparatus as assembled the guide lines form into a plurality of rows positioned to descend from the beams above and corresponding to the rows of growing plants.

The guide lines are used to guide the growth direction of the plants in familiar manner, either in that the plants are grown directly therealong or in that the plants are linked thereto via some suitable support system.

The beams are conveniently disposed to rotate about a generally vertical rotation axis in a plane generally parallel to the plane of the growing base. It follows as a matter of simple geometry that rotating a beam so disposed will vary the effective spacing of the guide lines in a transverse direction. Plant spacing may be varied without any need to move entire troughs.

The invention is intended to change spacing between the rows whilst in situ, to ensure optimum growing efficiency. There are several reasons why this might be desirable.

In fixed systems, it is known to array plants in suitably spaced rows, for example in paired rows with wider spacing between the pairs, to provide access aisles for cultivation or harvesting. In accordance with the invention, such an access row could be created temporarily between pairs of rows, by bringing each row in the pair closer. After being worked on, the rows are repositioned to a spacing more appropriate to maximise growing efficiency.

Different spacing between rows might also be desirable for example at different stages in the growth cycle or at different times during the day. Spacing may be varied during the day to optimise use of light, or during the growing season to accommodate plants at different stages of development, and for example to afford greater growing space and access to light to plants at a later stage of development.

The primary purpose of provision of pivoting growing guide beams in accordance with the invention is to allow variation of growing guide line spacing in a transverse direction relative to the row of beams, and consequently relative to the row direction of the growing plants in use. An undesired consequence of the rotation of a growing guide beam in the manner described is likely to be movement of guide lines relative to each other also in a longitudinal direction. In a preferred embodiment, the system geometry is modified such as in use to reduce the relative longitudinal movement of guide lines for a given desired relative transverse movement. This may be achieved in two ways in particular.

First, the apparatus of the invention may be so arranged that in a default position the elongate members making up the growing guide beams do not extend in a generally fully transverse direction, but are already positioned at an angle to such a transverse direction. For example, a guide beam in a default position is at an angle of at least 30° to the transverse direction, and preferably around 40 to 45° thereto. This serves as the default spacing for the guide lines.

To reduce the transverse spacing of the guide lines, a guide beam is rotated to form a larger angle relative to a transverse direction, for example 60°. With this starting geometry, the relative transverse movement is increased and the relative longitudinal movement reduced.

Second, the elongate members comprising the guide beams may be themselves shaped to maximise the desired effect. For example, an elongate member may have a sigmoidal or other curved form rather than being a simple linear structure.

Each guide beam in a row may in principle be separately operable, but in practice it is likely to be desirable for all guide beams in a row to be moveable co-operably and simultaneously, so as to vary the spacing between the individual guide lines making up the plurality of rows hanging down therefrom in a consistent and simple manner. To this end, suitable mechanical linking is provided between each guide beam in a row to allow for such simultaneous movement.

The guide lines serve as rows to guide the growth of the plants in conventional manner, either in that the plants grow directly thereupon or more preferably as set out in greater detail in the description of a possible embodiment below, in that the plants are supported thereon indirectly. One row of lines is provided for each row of plants which it is intended to grow in a given growing base. For example one or two pairs of rows of lines may be provided for each base. Each guide line in such a pair either joins the full length from guide beam to base, or more preferably hangs freely below the beam prior to use, but completes such a link in use as the growing plant becomes supported thereupon. As a result, each line in a pair forms a V-shape which opens or closes as the beam is rotated in accordance with the invention, and thus varies the linear spacing between the two plants growing thereon.

The guide lines comprise flexible elongate lines of any suitable construction and configuration to support the growing plants, either directly or indirectly. For example the guide lines comprise wire, rope, tape or the like. A guide line may be adapted for the plant to grow directly thereon, or may be adapted to retain a support means which also retains and supports a plant in association therewith.

In practice, growing areas for the produce to which the invention relates can be very large, and will usually comprise a plurality of growing bases, so as to accommodate a large plurality of growing rows of plants in a growing area. In such a case, a corresponding plurality of sets of guide apparatus in accordance with the invention can be provided, one above each such growing base. Where a plurality of such sets of apparatus is provided, means may provide for separate operation of an individual item of apparatus, to vary spacing between rows on a single base, or for co-operable operation of all sets of apparatus within a given area.

The invention is particularly suited to systems for the growing of vine-like fruit and vegetable cropping plants under glass. In such systems, the suspension means which support a growing row are preferably height adjustable, allowing for the height of a given row to be changed as plants cultivated upon its growing base become taller. For example, a base is supported by a height adjustable suspension means, preferably separate from any growing guide lines.

In accordance with the invention in a further aspect a method for the guidance of growth spacing of plants in a controlled environment, and in particular for vine-like plants, comprises the steps of:
providing an elongate growing base suitable for receiving a plurality of rows of plants;
supporting thereabove a plurality of growing guide beams supported on a guide beam support means so as to be disposable in use generally above and in a row generally parallel with a longitudinal direction of a growing base as above described, each guide beam carrying a plurality of guide lines spaced therealong so as to hang therebelow when the beam is so supported, wherein each beam is further mounted so as to be pivotable, in particular about a generally vertical axis in use, such that the angle of each beam relative to a notional longitudinal direction defined by the row of beams (and corresponding in use to the longitudinal direction of the growing base) can be changed, and hence the effective spacing of the lines hanging on a beam in a direction transverse to the said longitudinal direction can consequently be changed;
growing plants in a growing medium in or on the growing base so as to grow in a directly or indirectly supported member up the guide lines;
rotating the guide beams during cultivation to vary row spacing as required.

Other preferred features of the method will be understood by analogy with those discussed for the apparatus.

The invention will now be described by way of example only with reference to figures 1 to 3 of the accompanying drawings wherein:
figure 1 is an illustration in end elevation of a support framework for a plant trough fitted with a guide apparatus in accordance with the invention;
figure 2 is a plan view of the apparatus of figure 1;
figures 3a to c represent the growth of a plant on a support guide line such as that of figure 1.

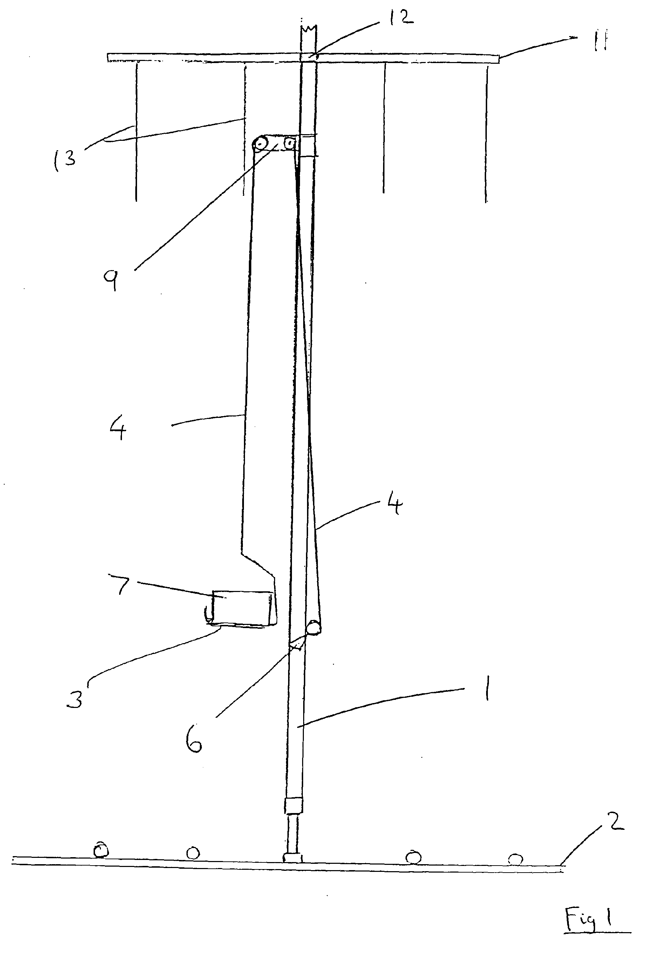

Referring first to figure 1, a suspended growing apparatus incorporating a growth guiding apparatus with variable spacing capability in accordance with the present invention is illustrated in side view.

The suspended growing system is to some extent conventional. A support column (1) engages a greenhouse floor (2). A growing trough (7) suitable for containing a growing medium into which can be grown plants in a plurality of rows is supported thereon by means of a suspended gutter (3) on a suspension wire (4).

The height of the suspended gutter (3), the trough (7), and consequently the plant growing height, are adjustable by adjusting the length of a support wire (4). This is done via the arrangement of pulleys (9) by operation of a winding tube (6) in essentially conventional manner. A central support (1) engages the floor. An upper point is not shown, but may engage with the framework of a building such as a greenhouse or the like for example in the roof, or the support framework may otherwise be free standing.

A guide apparatus in accordance with the invention is mounted above the growing volume. The guide apparatus in the example is shown mounted on the central support (1), but again could be mounted on a separate support structure, for example incorporated into the framework of the building, suspended from the roof etc.

The guide apparatus comprises a rigid elongate bar (11) which in the illustrating example is purely linear, but for the reasons set out hereinabove could be of a suitable alternative curved or other shape to optimise the effect exploited by the invention. The bar (11) is mounted for rotation about a pivot point (12) so as to be rotatable in a plane perpendicular to the plane of the paper in the diagram. Two pairs of guide wires (13) hang down from the bar (11). In the example shown, the guide wires extend only part of the distance to the suspended trough/gutter arrangement, and accordingly, in the absence of a growing plant, simply hang vertically. In an alternative configuration, guide wires could extend all the way to the trough.

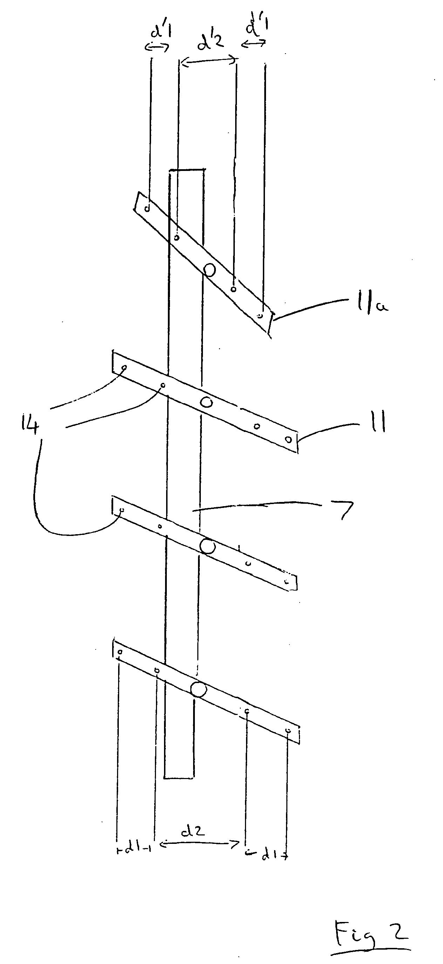

Figure 1 illustrates a growing apparatus including a guide apparatus in accordance with the invention in side view. In practice, the trough (7) will extend for a substantial length to accommodate long rows of plants, and a plurality of guide bars (11) will be disposed in a row parallel therewith, providing a plurality of hanging rows of guide wires (13). This is illustrated better in figure 2, which is a schematic representation of a small number of beams of the general arrangement of the apparatus of figure 1 in plan view.

The trough (7) can be clearly seen, together with a plurality of bars (11) in linear array above and parallel to the longitudinal direction of the trough. In the example, each bar pivots about a central pivot. The lower three bars are shown in a default orientation, already angled partly away from the transverse direction for the reasons discussed above. A fourth bar is shown more acutely angled to illustrate the effect of the operation of the invention. The illustration is essentially schematic. In practice, for most applications, it is likely that all bars in a row will be operated together so that the distance between entire rows of plants is altered.

Hanging points (14) for each wire are illustrated, these corresponding to the wires (13) in figure 1, and again forming two pairs. It can be seen that as the bar is rotated from the default position represented by the bars (11) to the more acutely angled position represented by the bar (11a), both the transverse separation distance between each row in a pair d1 and the separation distance between the two pairs d2, is reduced (respectively to d'1 and to d'2). This is the essence of the invention.

It is possible to vary the distance between rows of growing plants by manipulating only the guide lines which are used to guide the growth of the plant. There is no need to manipulate the whole trough. Rather, only the plants themselves, in particular the upper parts of the plants where growth is most active, are manipulated. The system concentrates manipulative effort where it is needed for the intended purpose, and is thus particularly convenient and efficient.

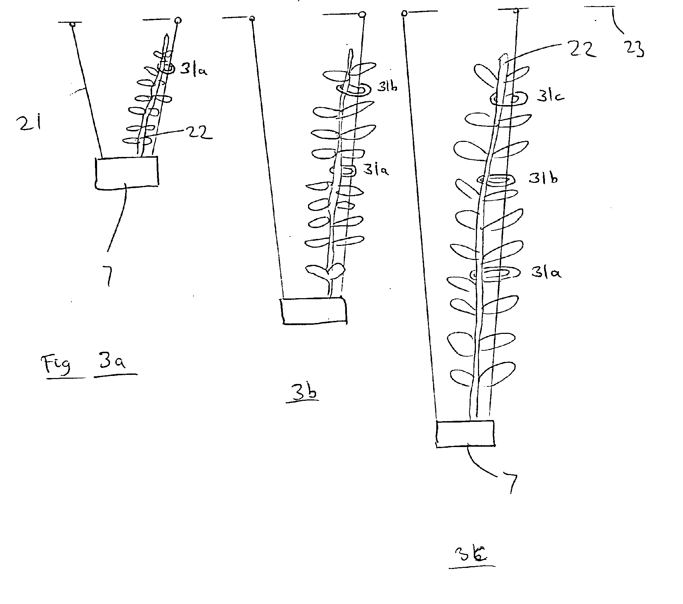

Figure 3 illustrates an optional additional embodiment of the invention, in which the guide wires are used indirectly to support the plant, rather than directly, in the sense that the plant does not itself grow along the guide wire, but is nevertheless supportably guided therealong.

In this case guide wires (21) are shown extending the full distance between a support height (23) and the growing trough (7). This is for illustrative convenience, although such an arrangement is perfectly possible, as the alternative illustrated in figure 3 is perfectly applicable to the embodiment of figures 1 and 2.

A growing plant (22) is shown at three stages of growth, successively represented in figures 3a, b and c. The plant is not directly grown around the wire (21), but is rather supported and guided thereon by the supports (31).

These supports may take the form of rings, ties, clips or the like, which are designed to be easily attachable as plant growth proceeds.

In figure 3a, the plant is initially supported by a single connection (31a) to the guide line (21). As plant growth progresses, the trough (7) is lowered in conventional manner. It eventually becomes necessary to fit a second connection (31b), and a third connection (31c), to continue to support the growing plant. In a case of vine-type plants, the process can be continued even after layering of the plants has commenced.

Each connection (31) may be fixed or may slide relative to the wire. Such a system is intended to be more flexible, in particular in relation to the options it might open up for materials for the wire (21). Where the plant is designed to be grown directly on the guide wire, disposability considerations are a major issue. After cropping, the exhausted plant needs to be disposed of and will have the wire attached. If the wire is not similarly degradable, a disposal issue is raised. With the arrangement illustrated in figure 3, a non-degradable wire which remains in the greenhouse can be used with degradable fixings (31) that can be discarded, or the fixings can be made removable, or even if neither of these alternatives is followed, the waste problem is still much reduced.

Although figure 3 illustrates wires extending all the way from the suspension point to the trough, the system is equally applicable to the arrangements of figures 1 and 2. In this case, as the plant grows and the trough is lowered, the lower fixings, where the plant is more robust and which are therefore no longer needed, slide beyond the guide wire.

## Claims

1. An apparatus for the guidance of growing plants comprising a plurality of growing guide beams supported on a guide beam support means so as to be disposable in use above and in a row generally parallel with a longitudinal direction of a growing base each guide beam carrying a plurality of guide wires spaced therealong so as to hang therebelow when the beam is so supported, wherein each beam is further mounted so as to be pivotable, such that the angle of each beam relative to a notional longitudinal direction defined by the row of beams (and corresponding in use to the longitudinal direction of the growing base) can be changed, and hence the effective spacing of the wires hanging on a beam in a direction transverse to the said longitudinal direction can consequently be changed.

2. An apparatus in accordance with claim 1 in combination with a suspended trough cultivation system comprising an elevated support framework supporting a plurality of growing rows incorporating a growing base containing a growing medium, and upwardly extending suspension means engaging with the support framework, the support means supporting a row of growing guide beams above and in a generally parallel direction to a growing base.

3. An apparatus in accordance with claim 1 or claim 2 wherein the beams are disposed to rotate about a generally vertical rotation axis in a plane generally parallel to the plane of the growing base.

4. An apparatus in accordance with claim 3 wherein system geometry is adapted such as in use to reduce the relative longitudinal movement of guide lines for a given desired relative transverse movement.

5. An apparatus in accordance with claim 4 wherein the elongate members are so arranged that in a default position the elongate members making up the growing guide beams do not extend in a fully transverse direction, but are already positioned at an angle of at least 30° to such a transverse direction.

6. An apparatus in accordance with claim 4 or claim 5 wherein an elongate member has a sigmoidal or like curved form so orientated as to reduce the relative longitudinal movement of guide lines for a given desired relative transverse movement.

7. An apparatus in accordance with any preceding claim wherein all guide beams in a row are mechanically linked to be moveable co-operably and simultaneously.

8. An apparatus in accordance with any preceding claim wherein or two pairs of rows of guide lines are provided for each base, each guideline effecting a link between guide beam and base, so disposed that each line in a pair forms a V-shape which opens or closes as the beam is rotated in accordance with the invention, and thus varies the linear spacing between two plants growing thereon.

9. An apparatus in accordance with any preceding claim wherein suspension means which support a growing row are height adjustable, allowing for the height of a given row to be changed as plants cultivated upon its growing base become taller.

10. A method for the guidance of growth spacing of plants in a controlled environment, and in particular for vine-like plants, comprises the steps of:
providing an elongate growing base suitable for receiving a plurality of rows of plants;
supporting thereabove a plurality of growing guide beams supported on a guide beam support means so as to be disposable in use generally above and in a row generally parallel with a longitudinal direction of a growing base as above described, each guide beam carrying a plurality of guide lines spaced therealong so as to hang therebelow when the beam is so supported, wherein each beam is further mounted so as to be pivotable, in particular about a generally vertical axis in use, such that the angle of each beam relative to a notional longitudinal direction defined by the row of beams (and corresponding in use to the longitudinal direction of the growing base) can be changed, and hence the effective spacing of the lines hanging on a beam in a direction transverse to the said longitudinal direction can consequently be changed;
growing plants in a growing medium in or on the growing base so as to grow in a directly or indirectly supported member up the guide lines;
rotating the guide beams during cultivation to vary row spacing as required.
